# EUROPÄISCHE PATENTANMELDUNG

(11) **EP 4 116 733 A1**
(43) Veröffentlichungstag der Anmeldung: **11.01.2023**
(21) Anmeldenummer: 22176566.2
(22) Anmeldetag: 31.05.2022
(51) Int. Cl.: G01S 7/497, G01S 17/89, G01S 7/481

(54) **KAMERA ZUR ERFASSUNG DREIDIMENSIONALER BILDDATEN UND VERFAHREN ZUR ÜBERPRÜFUNG DER FUNKTIONSFÄHIGKEIT EINER KAMERA**

(30) Priorität: 09.07.2021 DE 102021117818
(71) Anmelder: SICK AG, 79183 Waldkirch (DE)
(72) Erfinder: Jachmann, Fabian, 79102 Freiburg (DE)

(57) **Zusammenfassung**

Es wird eine Kamera (10) zur Erfassung dreidimensionaler Bilddaten aus einem Erfassungsbereich (18), die einen Bildsensor (24) mit einer Vielzahl von Lichtempfangselementen (24a) zum Erzeugen eines jeweiligen Empfangssignals, ein Referenzziel (44) sowie eine Steuer- und Auswertungseinheit (26) aufweist, die dafür ausgebildet ist, aus den Empfangssignalen dreidimensionale Bilddaten zu erzeugen sowie die Funktionsfähigkeit der Kamera (10) anhand von während der Erfassung des Referenzziels (44) erzeugter Empfangssignale zumindest einiger der Lichtempfangselemente (44a) zu überprüfen. Die Kamera (10) weist eine um eine Drehachse bewegliche Abtasteinheit (28) auf, in der der Bildsensor (24) untergebracht ist, und das Referenzziel (44) ist derart angeordnet, dass es in einer Referenzstellung der Abtasteinheit (28) erfasst wird.

## Beschreibung

Die Erfindung betrifft eine Kamera zur Erfassung dreidimensionaler Bilddaten und ein Verfahren zur Überprüfung der Funktionsfähigkeit einer Kamera nach dem Oberbegriff von Anspruch 1 beziehungsweise 12.

Eine derartige Kamera misst einen Abstand und gewinnt dadurch eine Tiefeninformation. Die erfassten dreidimensionalen Bilddaten mit Abstands- oder Entfernungswerten für die einzelnen Pixel werden auch als 3D-Bild, Entfernungsbild oder Tiefenkarte bezeichnet. Zur Ermittlung der Tiefeninformationen sind verschiedene Verfahren bekannt, wie Stereoskopie, Projektionsverfahren und eine Lichtlaufzeitmessung (ToF, Time of Flight).

In Anwendungen der Sicherheitstechnik erfasst die Kamera Personen in der Umgebung einer Gefahrenstelle, beispielsweise einer Maschine oder speziell eines Roboters. Bei Erkennung eines unzulässigen Eingriffs in ein Schutzvolumen oder Unterschreiten eines Sicherheitsabstands zu der Maschine erfolgt eine sicherheitsgerichtete Reaktion, um einen Unfall zu vermeiden. In der Sicherheitstechnik eingesetzte Sensoren müssen besonders zuverlässig arbeiten und deshalb hohe Sicherheitsanforderungen erfüllen, beispielsweise die Norm EN 13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile. Die Sicherheitsnormen spezifizieren weiterhin sogenannte Sicherheitsniveaus oder Sicherheitsanforderungsstufen, mit denen die erreichbare Sicherheit abgestuft wird. Beispiele dafür sind SIL nach IEC61508/IEC61511 (Safety Integrity Level) mit 1 als niedrigste und 4 als höchster Stufe oder PL (Performance Level) nach EN ISO 13849-1 mit a "niedrig" bis e "hoch".

Anwendungen der Sicherheitstechnik im industriellen Umfeld werden allerdings bisher in der Praxis meist noch mit sicheren Lichtgittern oder Laserscannern gelöst. Zunehmende Automatisierungsgrade würden an sich die Absicherung immer komplexerer Automatisierungsaufgaben und Geometrien erfordern, die mit diesen vergleichsweise einfachen, herkömmlichen Sicherheitssensoren nur bedingt realisierbar sind. Tatsächlich sind aber sichere Kameras oder gar sichere 3D-Kameras im Markt noch so gut wie nicht verfügbar, oder sie haben erhebliche Einschränkungen durch Reichweite, Baugröße, Kosten und dergleichen Faktoren. Beispielsweise basieren verfügbare 3D-Lichtlaufzeitkameras auf einem für ganz andere Anwendungen entwickelten hochintegriertem Bildsensor, in dem sowohl das Modulationssignal für die Beleuchtung wie auch die Demodulationssignale und ein großer Teil der Messtechnik integriert sind. Diese Bildsensoren sind folglich nicht mit dem Blick auf Sicherheitsanwendungen spezifiziert, und die fehlende Sicherheitsfunktionalität beziehungsweise die fehlenden sicherheitstechnischen Diagnosemöglichkeiten ließen sich auch nur rein theoretisch mit dem ungeheuren und für die Stückzahlen der Sicherheitstechnik schlicht prohibitiven Aufwand einer neuen Chipentwicklung ergänzen.

Ein herkömmlicher Sicherheitslaserscanner mit Drehspiegel tastet für einen Selbsttest als Teil der Maßnahmen für die Erfüllung der Sicherheitsnormen mit jedem Umlauf ein internes Referenzziel ab. Dies ist erstmals in der DE 43 40 756 A1 beschrieben und bis heute üblich. In der US 2011/0286009 A1 rotiert statt des Drehspiegels eine Sende-Empfangseinheit, und es wird ein Referenzobjekt an der Frontscheibe angeordnet, um deren Funktionsfähigkeit zu testen. Das Referenzziel eines Sicherheitslaserscanners wird in einem rückwärtigen Totbereich der Scanbewegung erfasst. Für eine Kamera ist das jedoch mangels Abtastbewegung nicht anwendbar. Von Lichtgittern wiederum ist ein Ruhestromprinzip bekannt, wonach im Ruhezustand ein Signal erwartet wird, so dass ein Ausfall und ein sicherheitskritischer Eingriff gleichermaßen erkannt werden. Dieser Gedanke ist auf Kameras nur übertragbar, wenn ständig eine Referenzkontur im gesamten Blickfeld erfasst wird. Dies ist beispielsweise bei Bodenüberwachung aus der Vogelperspektive möglich, schränkt aber die Anwendungsmöglichkeiten deutlich ein.

Aus der DE 10 2004 014 041 A1 ist ein Sensorsystem zur Hinderniserkennung bekannt, das durch Rotation mehrerer Mehrkanal-Sende- und Empfangseinheiten den Raum über 360° im Azimut und 30°-60° in Elevation abtastet. Für eine Selbstüberwachung oder Anwendungen der Sicherheitstechnik ist das Sensorsystem jedoch nicht ausgelegt.

Die EP 2 863 176 A1 offenbart einen Sensor mit einer um eine Drehachse beweglichen Abtasteinheit, und es können verschiedene Sensorsysteme rotieren, wie eine Kamera, ein Lichtlaufzeitmesssystem oder ein RFID- beziehungsweise Radarsystem. Das Lichtlaufzeitsystem ist einstrahlig, keine 3D-Kamera, allenfalls können einige wenige einstrahlige Systeme gemeinsam rotieren. Anwendungen in der Sicherheitstechnik sollen dadurch ermöglicht werden, dass die Abtasteinheit redundante oder diversitär-redundante Systeme aufweist, ein Selbsttest ist nicht vorgesehen.

Bekannt ist weiterhin, zum Selbsttest in Kameras eine zusätzliche Referenzlichtquelle zu verwenden. Die DE 10 2007 008 806 B3 beschreibt eine optoelektronische Überwachung mit Test durch Dynamisierung. Dabei wird in einem externen Test das Empfangslicht aus der Szenerie mit Testlicht überlagert. Für einen internen Test ist eine Zusatzbeleuchtung vorgesehen, die moduliertes Licht einer vorgegebenen Phase in das Empfangselement einstrahlt. Die US 2020/0341126 A1 stattet einen dreidimensionalen Sensor mit aktiver Beleuchtung mit verschiedenen diagnostischen Funktionen aus. Unter anderem wird der Bildsensor in Diagnosezyklen von zusätzlichen LEDs über eine Reflexion an der Innenseite des Gehäuses beleuchtet. Dafür muss jeweils die eigentliche Messung zyklisch unterbrochen werden. Die noch unveröffentlichte europäische Patentanmeldung mit dem Aktenzeichen 21157831.5 verteilt in einer 3D-Lichtlaufzeitkamera die Teilmessungen für einen Funktionstest auf mehrere Abstandsmessungen. Das verkürzt die erforderlichen Unterbrechungen, basiert aber auf demselben Grundprinzip.

Die DE 10 2018 124 835 B3 betrifft ein Solid-State-LIDAR, das eine Abtasteinheit ohne Drehmechanik verwendet, um einen Überwachungsbereich abzutasten. Ein Referenzziel ist so angeordnet, dass es in bestimmten Ablenkwinkeln getroffen wird. Hier handelt es sich nicht um eine Kamera, sondern einen Scanner, da jeweils nur Einzelmessungen an dem mit dem Sendestrahl angetasteten Szeneriepunkt durchgeführt werden. Mit dem Referenzziel soll vor allem geprüft werden, ob die Abtasteinheit zur Erzeugung des Scanmusters noch funktioniert, was für eine Kamera irrelevant ist.

Alles in allem fehlt es bislang an einem überzeugenden, verlässlichen und einfach umsetzbaren Konzept, um eine gattungsgemäße Kamera sicher im Sinne der Sicherheitsnormen auszugestalten.

Es ist daher Aufgabe der Erfindung, eine Kamera zur Erfassung dreidimensionaler Bilddaten anzugeben, die auf einfache Weise ihre Funktionsfähigkeit gewährleisten kann.

Diese Aufgabe wird durch eine Kamera zur Erfassung dreidimensionaler Bilddaten und ein Verfahren zur Überprüfung der Funktionsfähigkeit einer Kamera nach Anspruch 1 beziehungsweise 12 gelöst. Die Kamera weist einen Bildsensor mit einer Vielzahl von Lichtempfangselementen oder Pixeln auf. Eine Steuer- und Auswertungseinheit erzeugt aus den Empfangssignalen der Pixel je nach 3D-Prinzip der Kamera dreidimensionale Bilddaten. Dies kann unter anderem die Form einer 3D-Punktewolke oder eines 3D-Bildes erfolgen, das auch als Tiefenkarte bezeichnet wird. Zumindest ein Teil dieser Auswertung kann bereits in den Pixeln beziehungsweise auf dem Bildsensor erfolgen.

Die Kamera überprüft ihre Funktionsfähigkeit in einem Selbsttest mittels eines Referenzziels. Das Referenzziel ist bevorzugt ein internes Referenzziel, d.h. Teil der Kamera und beispielsweise in deren Innenraum oder Gehäuse angeordnet. Diese Überprüfung wird auch als Selbsttest oder Funktionstest bezeichnet. Mindestens einige der Pixel erzeugen während der Erfassung des Referenzziels Empfangssignale, die durch das Referenzziel verursacht oder beeinflusst sind, und dies wird mit einer Erwartung bei intakter Kamera verglichen, die beispielsweise vorgegeben oder eingelernt ist. Bei Abweichungen jenseits einer Toleranz wird ein defektes Pixel oder ein sonstiger Fehler insbesondere der Auswertung angenommen. Eine kurzzeitige Abweichung kann je nach Sicherheitsniveau hingenommen werden. Die Überprüfung der Funktionsfähigkeit ist auf verschiedenen Ebenen und in verschiedenem Umfang denkbar. Beispielsweise können direkt Empfangssignale oder erst die jeweiligen Entfernungswerte der Pixel nach der Erzeugung dreidimensionaler Bilddaten verglichen werden. Vorzugsweise wird der gesamte Empfangskanal beziehungsweise der in späteren Ausführungsformen eingeführte Sendekanal getestet. Der Funktionstest betrifft mindestens einige Pixel oder Pixelgruppen, vorzugsweise alle oder zumindest alle sicherheitsrelevanten Pixel. Manche Pixel können aus verschiedenen Gründen zumindest zeitweise nicht sicherheitsrelevant sein, so dass deren Ausfall keine Gefahr darstellt, etwa weil sie nicht in einem sicherheitsrelevanten interessierenden Bereich oder als Dunkelpixel gar nicht im Sichtbereich der Kamera erfassen oder weil sie momentan stummgeschaltet sind (Muting). Zugunsten eines homogenen Konzepts können dennoch alle Pixel geprüft werden. Es hängt vom Sicherheitskonzept ab, welche Anordnungen und Anzahlen defekter Pixel toleriert werden, ehe die Kamera nicht mehr als intakt angesehen wird.

Die Erfindung geht von dem Grundgedanken aus, die Kamera um eine Drehachse zu bewegen und das Referenzziel in einer Referenzstellung dieser Bewegung anzuordnen. Dazu weist die Kamera eine um die Drehachse bewegliche Abtasteinheit auf, in der der Bildsensor untergebracht ist. Der Bildsensor erfasst damit periodisch unterschiedliche Abschnitte des Erfassungsbereichs der Kamera. Das Referenzziel wird so angeordnet, dass es in der Referenzstellung der Abtasteinheit erfasst wird. In den meisten Stellungen der Abtasteinheit wird somit kein Referenzziel erfasst, die Sicht des Bildsensors auf die Szenerie beziehungsweise den gegenwärtigen Abschnitt des Erfassungsbereichs bleibt frei. Das Referenzziel kann in der Referenzstellung das gesamte Sichtfeld des Bildsensors oder nur einen Teil davon ausfüllen. Umgekehrt kann das Referenzziel in mehreren insbesondere zueinander benachbarten Referenzstellungen der Abtasteinheit erfasst werden, oder es sind in mehreren Referenzstellungen mehrere Referenzziele beispielsweise mit unterschiedlichem Reflexionsverhalten oder Muster vorhanden.

Die Erfindung hat den Vorteil, dass ein verlässlicher zyklischer Funktionstest ermöglicht wird, mit dem sich auf einfache Weise auch höhere Sicherheitsniveaus der Kamera realisieren lassen. Dabei werden ungünstige Wechselwirkungen zwischen normalem Betrieb und Selbsttest vermieden. Die bewegte Abtasteinheit löst zugleich die Einschränkung herkömmlicher Kameras auf, die ein begrenztes Sichtfeld von etwa 90°-120° aufweisen. Erfindungsgemäß sind wesentlich höhere Bildbreiten möglich.

Das Referenzziel ist bevorzugt in einem rückwärtigen Totbereich angeordnet. Der Bildsensor ist nicht in allen Stellungen der Abtasteinheit auf den Erfassungsbereich gerichtet. In hinteren Stellungen während der Bewegung wird nur eine Rückwand beziehungsweise das Innere der Kamera erfasst. Das hat konstruktive Gründe, bedeutet aber in der Praxis kaum eine Einschränkung, da beispielsweise bei Montage an einer Wand ohnehin nach hinten keine sinnvolle Bildaufnahme möglich wäre. Beispielsweise wird über einen Azimutwinkel von bis zu 270° und darüber hinaus der Erfassungsbereich aufgenommen, während die übrigen 90° den Totbereich bilden. Das Referenzziel nutzt diesen Totbereich sinnvoll aus. Es erstreckt sich über den gesamten Totbereich oder einen Teil davon. In alternativen Ausführungsformen wird der rückwärtige Totbereich verkleinert oder ganz vermieden, um möglichst eine Rundumsicht bis 360° zu ermöglichen. Das Referenzziel überlagert sich dann mit Szeneriemerkmalen.

Die Kamera ist bevorzugt als Lichtlaufzeitkamera ausgebildet und weist eine Beleuchtungseinheit zum Aussenden von Sendelicht auf, das insbesondere mit mindestens einer Modulationsfrequenz moduliert ist, wobei die Steuer- und Auswertungseinheit dafür ausgebildet ist, die dreidimensionalen Bilddaten mit einem Lichtlaufzeitverfahren zu erzeugen. Es wird vorzugsweise ein Phasenverfahren zur Bestimmung der Lichtlaufzeit verwendet. Prinzipiell ist auch ein pulsbasiertes Verfahren denkbar (dToF, direct Time of Flight). Es sei vorsichtshalber gesagt, dass für das Phasenverfahren eine künstliche Amplitudenmodulation mit einer gewählten Modulationsfrequenz erfolgt, die nicht mit der Trägerfrequenz der eigentlichen Lichtwelle verwechselt werden sollte. Das von Objekten im Erfassungsbereich zurückgeworfene Sendelicht fällt überlagert mit Fremd- oder Hintergrundlicht auf den Bildsensor. Die Beleuchtungseinheit leuchtet das jeweilige Sichtfeld des Bildsensors vorzugsweise vollständig aus, um mit allen Lichtempfangselementen oder Pixeln gleichzeitig zu messen. Bei einem Phasenverfahren wird in einem Lock-In-Verfahren durch Demodulation mit einem Signal der Modulationsfrequenz aus dem jeweiligen Empfangssignal ein Abtastwert gewonnen. Dies wird mit unterschiedlichem Versatz zwischen der Modulation des Sendelichts und dem Signal zum Demodulieren wiederholt, um so mehrere Abtastwerte zu gewinnen, aus denen die Phase und damit die Lichtlaufzeit rekonstruiert werden kann. Die Bestimmung der Lichtlaufzeit erfolgt vorzugsweise zumindest teilweise schon in den Pixeln oder auf dem Bildsensor, insbesondere ein Demodulieren der Empfangssignale mit der Modulationsfrequenz.

Das Referenzziel führt vorzugsweise zumindest einen Teil des Sendelichts auf den Bildsensor zurück. Es handelt sich somit um ein passives Referenzziel, das als eine Art optischer Kurzschluss innerhalb der Kamera wirkt. Dabei sind Reflexion, Remission und/oder Umlenkung vorstellbar, beispielsweise durch mindestens ein optisches Element wie einen Spiegel oder ein Prisma, oder schlicht durch eine Oberfläche mit definiertem Remissionsverhalten.

Das Referenzziel weist bevorzugt ein optisches Verzögerungselement auf. Die Referenzstrecke wird dadurch künstlich verlängert, beispielsweise auf einen Lichtweg von 10-50 cm. Die Messung dreidimensionaler Bilddaten im extremen Nahbereich ist je nach Messprinzip möglicherweise nicht verlässlich, und deshalb wird in dieser Ausführungsform dafür gesorgt, dass der Funktionstest nicht in diesem extremen Nahbereich erfolgt. Das optische Verzögerungselement kann beispielsweise als Lichtleiter und/oder als Kombination mehrerer Umlenkspiegel oder -prismen umgesetzt werden.

Das Referenzziel weist bevorzugt eine Lichtquelle zur Erzeugung von Referenzlicht. Hier wird nun das passive Referenzziel durch ein aktives Referenzziel ersetzt oder ergänzt, d.h. es sind auch Mischformen mit sowohl passiven als auch aktivem Referenzziel vorstellbar. Die Lichtquelle weist eine oder mehrere LEDs, Laserdioden, ein VCSEL-Array oder dergleichen auf. Sie kann noch eine Umlenkung aufweisen. Sie erzeugt auf dem Bildsensor einen Lichtfleck oder ein Lichtmuster. Je nach Ausgestaltung des Lichtmusters werden die Lichtempfangselemente mit gleichen oder unterschiedlichen Erwartungen getestet, wobei das Lichtmuster unterschiedlich aufgelöst sein kann, beispielsweise von einer gleichmäßigen Ausleuchtung oder einer einfachen 2x2-Aufteilung über den gesamten Sichtbereich hin zu einem fein aufgelösten Referenzbild. Der Vorteil eines aktiven Referenzziels besteht in einer besseren Kontrolle über das Lichtmuster, mit dem getestet wird. Allerdings kann auf diese Weise eine Beleuchtungseinheit der Kamera nicht getestet werden, und es bedarf somit zusätzlicher Maßnahmen zur Überwachung des Sendekanals.

Die Steuer- und Auswertungseinheit ist bevorzugt dafür ausgebildet, das Referenzlicht mit einer Zeitverzögerung auszusenden, die einem vorgegebenen Lichtweg entspricht. Dadurch können in einer Lichtlaufzeitkamera Referenzabstände emuliert werden, die von dem sehr kleinen und möglicherweise problematisch zu messenden physischen Abstand zwischen Bildsensor und Referenzziel in der Referenzstellung abweichen. Künstliche Verzögerungen erweitern und diversifizieren nochmals den Funktionstest.

Der Bildsensor weist bevorzugt eine Matrixanordnung von Lichtempfangselementen auf. Es handelt sich folglich um einen Bildsensor mit einer Pixelmatrix, wie sie auch in einer stehenden Kamera eingesetzt würde. Dank der Bewegung der Abtasteinheit wäre alternativ eine vertikale Bildsensorzeile denkbar, die dann allerdings mit sehr viel höherer Frequenz arbeiten müsste, um die fehlende laterale Auflösung beziehungsweise Auflösung im Azimut zumindest teilweise zu kompensieren.

Die Steuer- und Auswertungseinheit ist bevorzugt dafür ausgebildet, mit dem Bildsensor in verschiedenen Drehstellungen der Abtasteinheit aufgenommene dreidimensionale Bilddaten zusammenzufügen. Durch die Bewegung der Abtasteinheit entsteht effektiv eine Kamera mit großem lateralem Sichtbereich. Originär entsteht dabei aber erst einmal nur eine Abfolge von dreidimensionalen Bildern. Nach dieser Ausführungsform wird dies zu einer einheitlichen breiten Erfassung über den gesamten erfassten Azimut zusammengefügt, sei es in Form einer 3D-Punktewolke oder einer Art Panorama-3D-Bild. Zum korrekten Zusammenfügen ("Stitching") können die jeweils bekannten Stellungen der Abtasteinheit während der Aufnahme und/oder gemeinsame Bildmerkmale herangezogen werden.

Die Kamera ist bevorzugt sicher im Sinne einer Sicherheitsnorm für Maschinensicherheit oder berührungslos wirkende Schutzeinrichtungen ausgebildet und weist insbesondere einen Sicherheitsausgang für die Ausgabe eines sicherheitsgerichteten Absicherungssignals auf. Die Kamera erfüllt somit ein genau definiertes Sicherheitsniveau und darf deshalb zum Personenschutz an Gefahrenquellen eingesetzt werden, insbesondere zur Überwachung einer Maschine. Einleitend sind beispielhaft einige heute gültige einschlägige Sicherheitsnormen genannt, die sich regional und zukünftig in ihrer konkreten Formulierung, nicht aber ihrem grundsätzlichen Ansatz der Fehlervermeidung beziehungsweise rechtzeitigen Fehleraufdeckung zur Vermeidung von Unfällen durch Defekte oder sonstiges unerwartetes Verhalten unterscheiden. Diese Sicherheitsnormen sind nicht eigens auf Kameras ausgerichtet, aber die sichere Ausführung ist in dieser Ausführungsform von den gleichen Grundprinzipien geleitet. Wird eine Gefahr erkannt oder kann die eigene Funktionsfähigkeit nicht gewährleistet werden, so wird dies an dem Sicherheitsausgang signalisiert, insbesondere einem OSSD (Output Signal Switching Device). Dieser Sicherheitsausgang ist als Teil der normausfüllenden Maßnahmen sicher, etwa zweikanalig ausgeführt, und dient erforderlichenfalls zur Einleitung einer sicherheitsgerichteten Maßnahme wie einem Notaus oder etwas allgemeiner dem Herstellen eines sicheren Zustands an einer überwachten Maschine.

Die Steuer- und Auswertungseinheit ist bevorzugt für eine Schutzfeldauswertung ausgebildet, in der bestimmt wird, ob sich ein Objekt in mindestens einem konfigurierten Schutzfeld innerhalb des Erfassungsbereichs befindet. Damit ist eine bewährte Sicherheitsauswertung zur Erkennung von Gefahren bereits in die Kamera integriert, die direkt ein sicherheitsgerichtetes Absicherungssignal für eine Maschine oder eine zwischengeschaltete Sicherheitssteuerung bereitstellt. Die Schutzfelder können dreidimensional definiert werden, oder es wird einfach ein zweidimensionales Schutzfeld über die gesamte Höhe aufgezogen. Nicht jeder Schutzfeldeingriff führt zwangsläufig zu einer sicherheitsgerichteten Reaktion, es können noch weitere Prüfungen erfolgen, etwa auf eine Mindestgröße des eingreifenden Objekts, eine Mindestdauer des Eingriffs über mehrere Scans hinweg, und es kann auch im Schutzfeld zulässige Objekte beziehungsweise deaktivierte Teilbereiche geben (Muting, Blanking). Alternativ zu einer Schutzfeldauswertung sind andere Absicherungskonzepte denkbar, etwa ein sogenanntes Speed-and-Separation, das Mindestabstände von Objekten zu einer Gefahrenstelle überwacht, die von den Objektgeschwindigkeiten abhängen können.

Die Steuer- und Auswertungseinheit ist bevorzugt dafür ausgebildet, eine sicherheitsgerichtete Reaktion auszulösen, wenn die Funktionsfähigkeit der Kamera nicht sichergestellt ist. Der Funktionstest scheitert, wenn es in der Referenzstellung nicht mehr tolerierbare Unterschiede zwischen den Messungen und der Erwartung gibt. Dabei kann es Zusatzbedingungen geben, etwa dass die Unterschiede ein gewisses räumliches und zeitliches Ausmaß erreichen. Die Kamera kann dann ihre Absicherungsfunktion nicht verlässlich leisten, und eine von der Kamera überwachte Maschine wird vorsichtshalber in einen sicheren Zustand versetzt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera zur Erfassung dreidimensionaler Bilddaten mit rotierender Abtasteinheit;
- Fig. 2: eine Darstellung gemäß Figur 1, in der die Abtasteinheit sich in einer Referenzstellung befindet und zur Funktionsüberwachung ein Referenzziel erfasst;
- Fig. 3: eine Darstellung ähnlich Figur 2, jedoch mit einer Abwandlung des Referenzziels für eine zusätzliche Verzögerung.

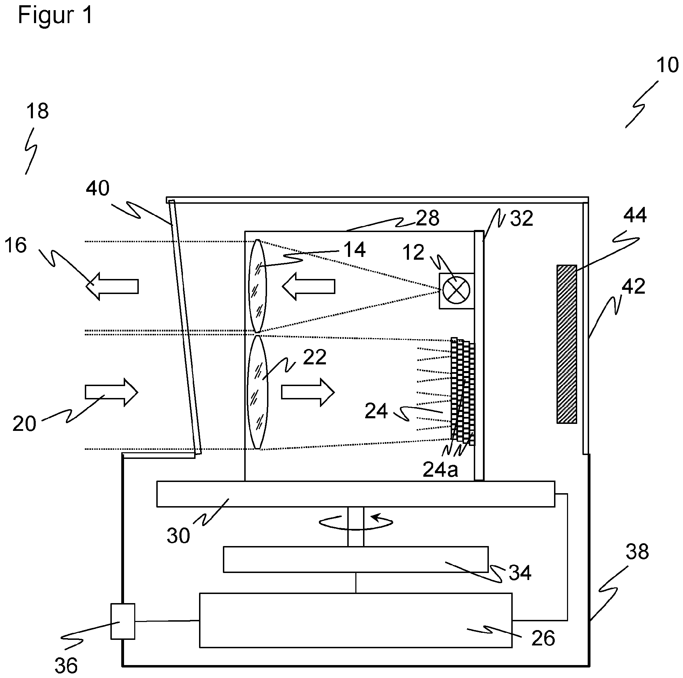

Figur 1 zeigt eine schematische Schnittdarstellung einer Kamera 10 zur Erfassung dreidimensionaler Bilddaten. Es wird beispielhaft das 3D-Erfassungsprinzip mit einem phasenbasierten oder indirekten Lichtlaufzeitverfahren (iToF, indirect Time of Flight) beschrieben, es sind aber pulsbasierte Lichtlaufzeitverfahren (dToF, direct Time of Flight) oder ganz andere dreidimensionale Bildgebungsverfahren denkbar.

Eine Beleuchtungseinheit 12 sendet durch eine Sendeoptik 14 moduliertes Sendelicht 16 in einen Erfassungsbereich 18 aus. Als Lichtquelle kommen beispielsweise LEDs oder Laser in Form von Kantenemittern oder VCSEL in Betracht. Die Beleuchtungseinheit 12 ist derart ansteuerbar, dass die Amplitude des Sendelichts 16 mit einer Frequenz typischerweise im Bereich von 1 MHz bis 1000 MHz moduliert wird. Die Modulation ist beispielsweise sinus- oder rechteckförmig, jedenfalls eine periodische Modulation. Zur Reduktion der gegenseitigen Beeinflussung mehrerer Systeme kann auch ein künstlicher Jitter beziehungsweise eine Art Codierung (Spread Spectrum) verwendet werden. Durch die Frequenz entsteht ein begrenzter Eindeutigkeitsbereich der Abstandsmessung, so dass für große Reichweiten der Kamera 10 kleine Modulationsfrequenzen erforderlich sind. Alternativ werden Messungen bei zwei bis drei oder mehr Modulationsfrequenzen durchgeführt, um in Kombination der Messungen den Eindeutigkeitsbereich zu vergrößern.

Trifft das Sendelicht 16 in dem Erfassungsbereich 18 auf ein Objekt, so wird ein Teil als Empfangslicht 20 zu der Kamera 10 zurückgeworfen und dort durch eine Empfangsoptik 22, beispielsweise eine Einzellinse oder ein Empfangsobjektiv, auf einen Bildsensor 24 geführt. Der Bildsensor 24 weist eine Vielzahl von beispielsweise zu einer Matrix oder Zeile angeordneten Empfangselementen oder Empfangspixeln 24a auf. Die Auflösung des Bildsensors 24 kann von zwei oder einigen wenigen bis hin zu tausenden oder Millionen Empfangspixeln 24a reichen.

Die Empfangspixel 24a demodulieren das Empfangssignal mit einem Signal der Modulationsfrequenz des Sendelichts 16 (Lock-In-Verfahren). Dadurch wird ein Abtastwert erzeugt. Mehrere Abtastwerte entstehen mittels mehrerer Ladungsspeicher, zwischen denen in bestimmten Phasen der Modulationsfrequenz umgeschaltet wird, und/oder durch Messwiederholung bei variiertem Phasenversatz zwischen der Modulation des Sendelichts und des Signals für das Demodulieren. Typische Beispiele sind Messwiederholungen bei Phasenbezug 0°, 90°, 180° und 270° oder 0°, 120° und 240°.

In einer Steuer- und Auswertungseinheit 26 wird aus den Abtastwerten der Phasenversatz rekonstruiert, der durch die Lichtlaufzeit von der Kamera 10 zu einem Objekt und zurück entsteht. Wie bereits erwähnt, kann der Eindeutigkeitsbereich durch Messung mit mehreren Modulationsfrequenzen erweitert werden. Es entsteht nach Reskalierung mit der Lichtgeschwindigkeit, genaugenommen wegen des doppelten Lichtwegs der halben Lichtgeschwindigkeit, ein Bild, Abstandsbild oder Tiefenbild, das auch als 3D-Punktwolke oder in sonstiger Form erzeugt werden kann.

Die Aufteilung der Figur 1 in einen Bildsensor 24 mit Empfangspixeln 24a, in denen jeweils schon demoduliert wird, und eine Steuer- und Auswertungseinheit 26 zur weiteren Erzeugung von dreidimensionalen Bilddaten ist nur eine bevorzugte Ausführungsform. Die Steuer- und Auswertungsfunktionalität kann auch anders verteilt sein. Die Steuer- und Auswertungseinheit 26 muss auch keineswegs monolithisch aus einem einzigen Baustein bestehen wie dargestellt, sondern kann aus einem oder mehreren digitalen Rechenbausteinen zusammengesetzt sein, wie Mikroprozessoren, FPGAs (Field-Programmable Gate Array) oder ASICs (Application-Specific Integrated Circuit). Weiterhin kann die Beleuchtungseinheit 12 eine Flächenbeleuchtung sein, wozu beispielsweise ein Diffusor als Teil der Sendeoptik 14 eingesetzt wird. In einer anderen Ausführungsform wird eine Anordnung zahlreicher Einzellichtquellen der Beleuchtungseinheit 12 scharf in den Erfassungsbereich 18 projiziert, so dass im Ergebnis die Empfangspixel 24a einzeln beleuchtet werden und die Reichweite sich erhöht.

Erfindungsgemäß ist vorgesehen, dass das bisher beschriebene Kameramodul mit der Beleuchtungseinheit 12 und dem Bildsensor 24 in einer Abtasteinheit 28 in eine Bewegung um eine Drehachse versetzt wird, vorzugsweise eine Drehbewegung, aber auch eine andere Bewegung wie eine Schwenkbewegung ist vorstellbar. Beispielhaft weist die Abtasteinheit 28 eine horizontal angeordnete Leiterplatte 30 und eine vertikal angeordnete Leiterplatte 32 auf. Die horizontal angeordnete Leiterplatte 30 wird durch den Antrieb eines Motors 34 in eine Bewegung, insbesondere eine kontinuierliche Rotationsbewegung versetzt. Auf der vertikal angeordneten Leiterplatte 32 sind Beleuchtungseinheit 12 und Bildsensor 24 angeordnet. Es sind Ausführungsformen mit mehr oder weniger Leiterplatten und anderen Bauelementen der Abtasteinheit 28 möglich.

Die jeweilige Winkelstellung der Abtasteinheit 26 wird über einen nicht dargestellten Encoder erfasst. Damit ist der Steuer- und Auswertungseinheit 26 bekannt, in welche Richtung beziehungsweise in welchem Azimutwinkel eine jeweilige Aufnahme des Bildsensors 24 erfolgt.

In dem Erfassungsbereich 18 können Schutzfelder definiert werden, in die unzulässige Objekte wie Bedienpersonen oder deren Körperteile nicht eingreifen dürfen. Erkennt die Auswertungseinheit 26 einen unzulässigen Schutzfeldeingriff, so wird über einen sicheren Ausgang 36 (OSSD, Output Signal Switching Device) ein sicherheitsgerichtetes Abschaltsignal ausgegeben, um beispielsweise eine überwachte gefährliche Maschine anzuhalten oder in eine ungefährliche Position beziehungsweise allgemeiner einen sicheren Zustand zu verbringen. Alternativ wird ein anderes Sicherheitskonzept wie Speedand-Separation verfolgt, oder es werden über den Ausgang 36 Messdaten, dreidimensionale Bilddaten oder kürzeste Abstände zwischen einer überwachten Maschine und erfassten Objekten ausgegeben und extern weiterverarbeitet, insbesondere in einer angeschlossenen Sicherheitssteuerung.

Die Steuer- und Auswertungseinheit 26 ist in Figur 1 außerhalb der Abtasteinheit 28 gezeigt. Zumindest ein Teil dieser Funktionalität kann alternativ in die Abtasteinheit 28 verlagert werden. Für eine Verbindung einer nicht mitbewegten Steuer- und Auswertungseinheit 26 zu Elementen der Abtasteinheit 28 ist vorzugsweise eine nicht gezeigte drahtlose Kommunikation vorgesehen. Ebenso werden die Elemente der Abtasteinheit 28 vorzugsweise berührungslos versorgt.

Alle genannten Funktionskomponenten sind in einem Gehäuse 38 angeordnet, das zumindest im Bereich des Lichtaus- und Lichteintritts eine Frontscheibe 40 aufweist. Die Frontscheibe 40 ist häufig, aber nicht zwingend als Rotationskörper ausgebildet und muss sich auch in beiden Fällen nicht unbedingt über 360° erstrecken, so dass dann ein gewisser Winkelbereich als Totbereich verbleibt. Beispielsweise erstreckt sich der Erfassungsbereich 18 über bis zu 270° und mehr, und der Totbereich macht den verbleibenden Azimutwinkel von etwa 90° aus. Das ist ein erheblich größeres Sichtfeld als bei einer stehenden Kamera, und etwa bei einer Eckmontage an einem Fahrzeug sind 270° gerade angemessen.

In Figur 1 ist ein Totbereich auf der rechten Seite angeordnet. Dort befindet sich eine Gehäuserückwand 42 anstelle der Frontscheibe 40, wobei die Frontscheibe 40 alternativ durchgehend ausgebildet sein kann und dann im hinteren Bereich die Funktion einer Gehäuserückwand übernimmt. Im Totbereich ist ein Referenzziel 44 angeordnet, dessen Ausgestaltungsmöglichkeiten und Funktion noch erläutert werden. Hier ist das Referenzziel 44 passiv, alternativ kann es eine Lichtquelle aufweisen, die dann mit der Steuer- und Auswertungseinheit 26 verbunden würde. Es ist ein internes Referenzziel 44 gezeigt, das innerhalb des Gehäuses 38 verbaut ist. Alternativ ist ein externes Referenzziel vorstellbar, das dann in definierter Position bezüglich der Kamera 10 montiert werden muss.

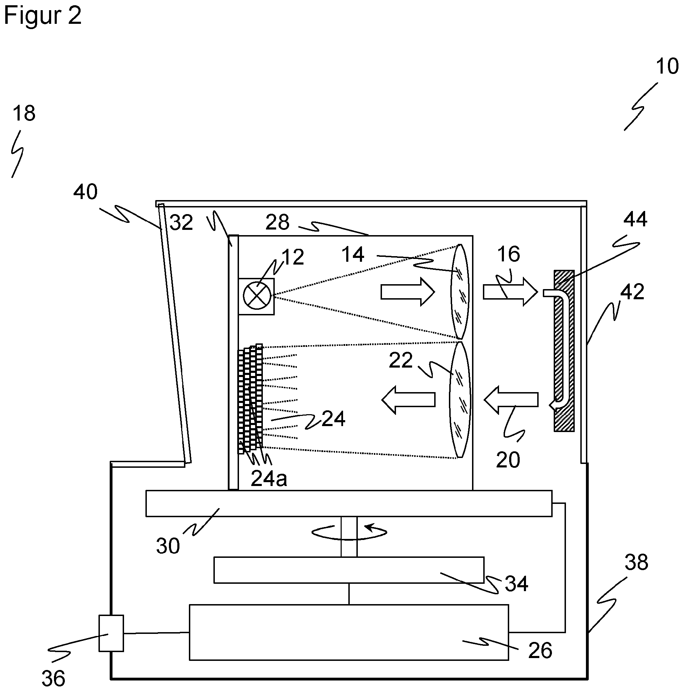

Figur 2 zeigt die Kamera 10 der Figur 1 in einer um 180° verdrehten Winkelstellung der Abtasteinheit 28. In diesem rückwärtigen Bereich liegt der soeben erwähnte Totbereich der eigentlichen Messung, in dem keine dreidimensionalen Bilddaten aus dem Erfassungsbereich 18 erfasst werden. Die Gehäuserückwand 42 ist vorzugsweise intransparent, oder die Frontscheibe 40 kann hier entsprechend beschichtet werden.

In einer Referenzstellung, die beispielsweise bei der dargestellten Orientierung der Abtasteinheit 28 nach hinten, um 180° zu einer azimutalen Mitte des Erfassungsbereichs 18 versetzt, und jedenfalls vorzugsweise in dem Totbereich liegt, wird statt der Szenerie das Referenzziel 44 erfasst. Damit wird ein Selbsttest oder eine Funktionsüberwachung der Kamera 10 ermöglicht. Das Referenzziel 44 ist nur als Block mit einem den Lichtweg andeutenden Pfeil dargestellt. Ein Teil des Sendelichts 16 wird ohne Lichtweg über den Erfassungsbereich 18 auf den Bildsensor 24 umgelenkt und bildet quasi einen optischen Kurzschluss. Dafür können Spiegel, Prismen und sonstige optische Elemente eingesetzt werden. Es ist auch ein Referenzobjekt mit definiert remittierenden Oberflächen oder eine entsprechende Beschichtung oder Bemalung der Gehäuserückwand 42 denkbar. Das von dem Referenzziel 44 umgeleitete Sendelicht 16 beleuchtet zumindest einen Teil der Lichtempfangselemente 24a, vorzugsweise alle Lichtempfangselemente 24.

Die Steuer- und Auswertungseinheit 26 hat eine Erwartung an die Empfangssignale der Empfangspixel 24a während der Erfassung des Referenzziels 44 und/oder an die mit diesen Empfangssignalen gemessenen Entfernungen. Diese Erwartung ist beispielsweise eingelernt, bei einer Lichtlaufzeitmessung lässt sie sich auch anhand des Lichtwegs bei den bekannten geometrischen Gegebenheiten voraussagen. Weicht das Messergebnis um mehr als eine Toleranz von der Erwartung ab, so wird ein Fehler angenommen, der Funktionstest ist dann nicht bestanden. Je nach Sicherheitsniveau und Sicherheitskonzept können ein lokal begrenzter Fehler beispielsweise in einzelnen Pixeln, ein transienter Fehler etwa in nur einer einzigen Aufnahme und dergleichen toleriert werden. Ein Fehler, bei dem die sichere Funktion nicht mehr gewährleistet ist, führt vorzugsweise zu einer sicherheitsgerichteten Reaktion mit Ausgabe eines entsprechenden Signals, das eine direkt oder mittelbar angeschlossene überwachte Maschine in einen sicheren Zustand versetzt.

Die Erwartung während der Referenzmessung wird nur erfüllt, solange die gesamte Signalkette von der Beleuchtungseinheit 12 bis zu den Empfangspixeln 24a und vorzugsweise auch der Lichtlaufzeitauswertung intakt ist. Somit wird in kurzen Zyklen entsprechend der Geschwindigkeit der Bewegung der Abtasteinheit 28 die Funktion der vollständigen Signalkette über Sendekanal, Empfangskanal und Auswertung überwacht. Es ist alternativ denkbar, nur Teile der Signalkette zu überwachen. Beispielsweise kann mit einem aktiven Referenzziel die Signalkette nur ohne den Sendekanal getestet werden. Für ein entsprechendes Sicherheitsniveau sollten dann jedoch zusätzliche Maßnahmen ergriffen werden.

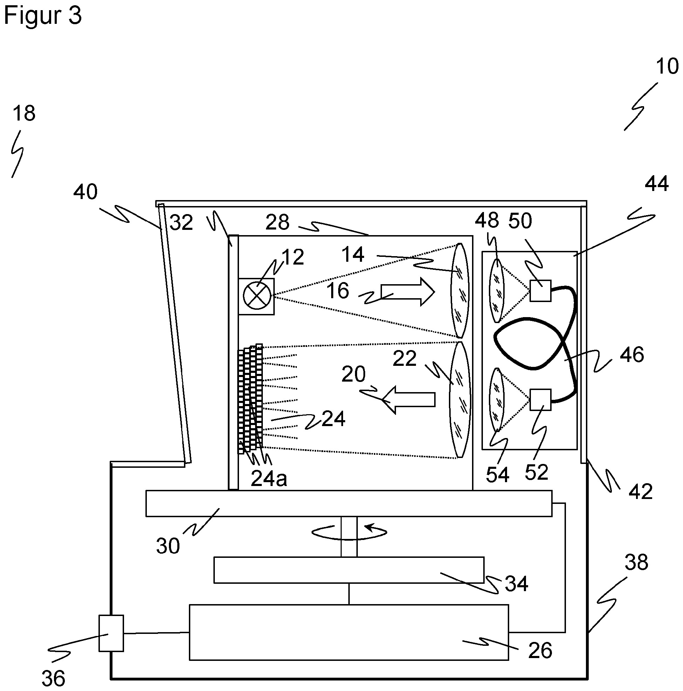

Figur 3 zeigt in einer Darstellung ähnlich Figur 2 eine weitere Ausführungsform der Kamera 10. Sie unterscheidet sich in der Ausgestaltung des Referenzziels 44. Für eine Kamera 10 mit indirekter Lichtlaufzeitmessung kann die Messung von Abständen zu Objekten in unmittelbarer Nähe problematisch sein, und entsprechende Schwierigkeiten ergeben sich womöglich bei anderen Messprinzipien. Deshalb wird häufig ein Mindestabstand von beispielsweise 10-50 cm gefordert, ab dem die Kamera 10 erst messfähig wird. Der Lichtweg über das interne Referenzziel 44 ist jedoch sehr kurz und kann diesen Mindestabstand unterschreiten.

In der Ausführungsform gemäß Figur 3 wird dies durch eine Verzögerung in dem Referenzziel 44 ausgeglichen. Es wird mit anderen Worten der Lichtweg künstlich verlängert, damit die Referenzstrecke länger wird als der extreme Nahbereich. Als optisches Verzögerungselement 46 eignet sich beispielsweise ein Lichtleiter passender Länge, wobei andere Umlenkungen und dergleichen ebenfalls vorstellbar sind. Eingangs und ausgangs des optischen Verzögerungselements 46 sind vorzugsweise noch optische Kopplungselemente 48, 50, 52 und 54 vorgesehen.

## Patentansprüche

1. Kamera (10) zur Erfassung dreidimensionaler Bilddaten aus einem Erfassungsbereich (18), die einen Bildsensor (24) mit einer Vielzahl von Lichtempfangselementen (24a) zum Erzeugen eines jeweiligen Empfangssignals, ein Referenzziel (44) sowie eine Steuer- und Auswertungseinheit (26) aufweist, die dafür ausgebildet ist, aus den Empfangssignalen dreidimensionale Bilddaten zu erzeugen sowie die Funktionsfähigkeit der Kamera (10) anhand von während der Erfassung des Referenzziels (44) erzeugter Empfangssignale zumindest einiger der Lichtempfangselemente (44a) zu überprüfen,
**dadurch gekennzeichnet,**
**dass** die Kamera (10) eine um eine Drehachse bewegliche Abtasteinheit (28) aufweist, in der der Bildsensor (24) untergebracht ist, und dass das Referenzziel (44) derart angeordnet ist, dass es in einer Referenzstellung der Abtasteinheit (28) erfasst wird.

2. Kamera (10) nach Anspruch 1,
wobei das Referenzziel (44) in einem rückwärtigen Totbereich angeordnet ist.

3. Kamera (10) nach Anspruch 1 oder 2,
die als Lichtlaufzeitkamera ausgebildet ist und eine Beleuchtungseinheit (12) zum Aussenden von Sendelicht (16) aufweist, das insbesondere mit mindestens einer Modulationsfrequenz moduliert ist, wobei die Steuer- und Auswertungseinheit (26) dafür ausgebildet ist, die dreidimensionalen Bilddaten mit einem Lichtlaufzeitverfahren zu erzeugen.

4. Kamera (10) nach Anspruch 3,
wobei das Referenzziel (44) zumindest einen Teil des Sendelichts (14) auf den Bildsensor (24) zurückführt.

5. Kamera (10) nach einem der vorhergehenden Ansprüche,
wobei das Referenzziel (44) ein optisches Verzögerungselement (46) aufweist, insbesondere einen Lichtleiter.

6. Kamera (10) nach einem der vorhergehenden Ansprüche,
wobei das Referenzziel (44) eine Lichtquelle zur Erzeugung von Referenzlicht aufweist.

7. Kamera (10) nach Anspruch 6,
wobei die Steuer- und Auswertungseinheit (26) dafür ausgebildet ist, das Referenzlicht mit einer Zeitverzögerung auszusenden, die einem vorgegebenen Lichtweg entspricht.

8. Kamera (10) nach einem der vorhergehenden Ansprüche,
wobei der Bildsensor (24) eine Matrixanordnung von Lichtempfangselementen (24a) aufweist.

9. Kamera (10) nach einem der vorhergehenden Ansprüche,
wobei die Steuer- und Auswertungseinheit (26) dafür ausgebildet ist, mit dem Bildsensor (24) in verschiedenen Drehstellungen der Abtasteinheit (28) aufgenommene dreidimensionale Bilddaten zusammenzufügen.

10. Kamera (10) nach einem der vorhergehenden Ansprüche,
die sicher im Sinne einer Sicherheitsnorm für Maschinensicherheit oder berührungslos wirkende Schutzeinrichtungen ausgebildet ist und insbesondere einen Sicherheitsausgang (36) für die Ausgabe eines sicherheitsgerichteten Absicherungssignals aufweist, wobei insbesondere die Steuer- und Auswertungseinheit (26) für eine Schutzfeldauswertung ausgebildet ist, in der bestimmt wird, ob sich ein Objekt in mindestens einem konfigurierten Schutzfeld innerhalb des Erfassungsbereichs (18) befindet.

11. Kamera (10) nach einem der vorhergehenden Ansprüche,
wobei die Steuer- und Auswertungseinheit (26) dafür ausgebildet ist, eine sicherheitsgerichtete Reaktion auszulösen, wenn die Funktionsfähigkeit der Kamera (10) nicht sichergestellt ist.

12. Verfahren zu Überprüfung der Funktionsfähigkeit einer Kamera (10) zur Erfassung dreidimensionaler Bilddaten aus einem Erfassungsbereich (18), insbesondere einer Kamera (10) nach einem der vorhergehenden Ansprüche, wobei die Kamera (10) mit einem Bildsensor (24) mit einer Vielzahl von Lichtempfangselementen (24a) ein jeweiliges Empfangssignal und daraus die dreidimensionalen Bilddaten erzeugt und wobei die Funktionsfähigkeit anhand von während der Erfassung eines Referenzziels (44) der Kamera (10) erzeugten Empfangssignalen zumindest einiger der Empfangselemente (24a) überprüft wird,
**dadurch gekennzeichnet,**
**dass** der Bildsensor (24) in einer Abtasteinheit (28) untergebracht ist, die um eine Drehachse bewegt wird und dass das Referenzziel (44) in einer Referenzstellung der Abtasteinheit (28) erfasst wird.
